# EUROPEAN PATENT SPECIFICATION

(11) **EP 4 525 144 B1**
(45) Date of publication and mention of the grant of the patent: **22.07.2026**
(21) Application number: 24767315.5
(22) Date of filing: 22.02.2024
(51) Int. Cl.: H01M 10/658, H01M 50/204, H01M 50/289, H01M 50/342, H01M 50/242, H01M 10/6551, H01M 50/502, H01M 50/271, H01M 50/375, H01M 10/613, H01M 50/209

(54) **BATTERY PACK**
BATTERIEPACK
BLOC-BATTERIE

(30) Priority: 03.03.2023 KR 20230028170
(43) Date of publication of application: 19.03.2025
(60) Divisional application: 26184752.9
(73) Proprietor: LG Energy Solution, Ltd., Seoul 07335 (KR)
(72) Inventor: CHOI, Jong Hwa, Daejeon 34122 (KR); LEE, Hyoung Suk, Daejeon 34122 (KR); PARK, Seung Chul, Daejeon 34122 (KR); KIM, Dae Gil, Daejeon 34122 (KR); LIM, Chae Won, Daejeon 34122 (KR)
(74) Representative: Plasseraud IP
(86) International application number: PCT/KR2024/002318
(87) International publication number: WO 2024/186026

(56) References cited:
- JP-A- 2002 063 947
- JP-A- 2002 063 947
- JP-A- 2008 201 371
- JP-A- 2022 516 519
- JP-B2- 3 674 967
- JP-B2- 3 674 967
- KR-A- 20220 121 594
- US-A1- 2016 226 115

## Description

This application claims the benefit of priority based on Korean Patent Application No. 10-2023-0028170, filed on March 3, 2023.

### [Technical Field]

The present invention relates to a battery pack with an upper cover including a heat insulating layer.

### [Background Art]

Recently, chargeable and dischargeable secondary batteries have been widely used as energy sources of wireless mobile devices. In addition, secondary batteries have attracted attention as energy sources of electric vehicles, hybrid electric vehicles, etc., and suggested as a solution to air pollution due to existing gasoline vehicles and diesel vehicles using fossil fuel.

Two or three battery cells are arranged in secondary batteries for use in small-sized devices, but battery modules in which a plurality of battery cells are electrically connected are used in secondary batteries for use in medium-or large-sized devices such as vehicles. In addition, a battery pack in which a plurality of battery modules are electrically connected may be used.

A battery cell may be manufactured by accommodating an electrode assembly in which a positive electrode, a negative electrode, and a separator are stacked and an electrolyte in a case. Battery cells may be categorized into cylindrical battery cells, prismatic battery cells, and pouch type battery cells according to the shape of the case.

A battery cell may be repeatedly charged and discharged through an electrochemical reaction between components thereof. However, a temperature of the battery cell may abnormally increase due to excessive charging and discharging of the battery cell or a defect of the battery cell. When a temperature of the battery cell is not appropriately adjusted, the battery cell may burst and a high-temperature gas may be generated. In addition, in this case, a temperature of neighboring battery cells may rise, thus causing a continuous explosion. To prevent this problem, venting holes may be formed in an upper part of a battery module in which multiple battery cells are accommodated. When an internal temperature of the battery module increases excessively, a high-temperature gas may be discharged through the venting holes in the upper part of the battery module. Patent documents US 2016/226115 A1 and JP 2002 063947 A and KR100852727 B1 disclose examples of battery cells.

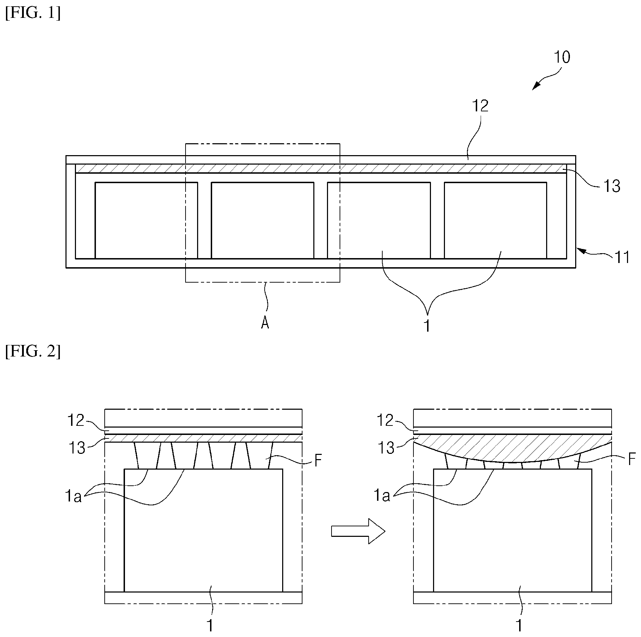

FIG. 1 is a cross-sectional view illustrating a cross-section of a battery pack 10 of the related art, and FIG. 2 is an enlarged view of an area A of FIG. 1.

As shown in FIG. 1, the battery pack 10 includes a lower pack housing 11 for accommodating the battery module 1, and an upper cover 12 covering the lower pack housing 11.

The battery pack 10 may be installed on the bottom of a vehicle. As described above, when a high-temperature gas F is discharged from the upper part of the battery module 1, high-temperature heat may be transferred to passengers in the vehicle. To prevent this problem, as shown in FIGS. 1 and 2, in the battery pack 10 of the related art, a heat-resistant member 13 is attached to an inner side of the upper cover 12. The heat-resistant member 13 may be a heat-resistant block or a heat-resistant sheet formed of a heat-resistant material. Alternatively, the heat-resistant member 13 may be a heat-resistant layer formed on an inner surface of the upper cover 12 using a heat resistant resin. However, as shown in FIG. 2, the heat-resistant member 13 may expand or melt due to a high-temperature gas and thus sag toward the battery module 1 below the heat-resistant member 13, thus blocking a venting hole 1a in the battery module 1. In this case, a battery cell or the battery module 1 may explode due to a failure of discharging a high-temperature gas from the inside of the battery module 1 and rapid heat transfer between adjacent battery cells.

Therefore, it is necessary to develop a technique for preventing the venting hole 1a from being blocked due to the fire-resistant member 13.

### [Disclosure]

### [Technical Problem]

To address the above-described problem, the present invention is directed to providing a battery pack with an upper cover for effectively blocking high-temperature heat transferred toward an upper part of the battery pack without blocking venting holes in a battery module even in a thermal runaway situation.

### [Technical Solution]

An aspect of the present invention provides a battery according to claim 1 and including a battery module,
a lower pack housing with an accommodation space in which the battery module is installed, and an upper cover coupled to an upper part of the lower pack housing to cover the accommodation space, in which the upper cover includes a first upper cover facing the battery module, and a second upper cover, at least a part of which is spaced apart from the first upper cover to form a heat insulating layer between the first and second upper covers.

The first upper cover and the battery module may be spaced apart from each other, and a lower surface of the first upper cover may face an upper surface of the battery module.

The second upper cover may comprises a plurality of upper discharge holes to communicate the heat insulating layer with the outside.

The second upper cover may include upper discharge members configured to close the upper discharge holes to airtightly seal the heat insulating layer and configured to rupture communicate the heat insulating layer with the outside when an internal temperature of the heat insulating layer rises to a predetermined temperature or higher

The second upper cover includes, according to claim 1, an upper plate spaced apart from the first upper cover, and a partition plate connected to an end of the upper plate in a width direction and bent from the upper plate toward the first upper cover to divide the heat insulating layer into several parts.

The lower pack housing may include a bottom housing configured to support a bottom surface of the battery module and cross-beams configured to divide the accommodation space into several parts and support sides of the battery module, and the cross-beams may be coupled to the upper cover.

A thickness of the first upper cover may be different from a thickness of the second upper cover.

The lower pack housing may include a bottom housing configured to support a lower surface of the battery module, and side wall housings installed along circumference of the bottom housing. Each of the side wall housings may include an hollow channel, and a side wall communication hole may be provided in a surface of the side wall housing facing the accommodation space to communicate the accommodation space with the hollow channel.

The battery pack may further include a heat insulating member on the heat insulating layer.

The heat insulating member may be a heat insulating block on a surface of the first upper cover facing the heat insulating layer.

The battery module may include a battery cell stack in which a plurality of battery cells are stacked, and a bus bar frame coupled to a front surface and a rear surface of the battery cell stack in a longitudinal direction. An upper surface and a lower surface of the battery cell stack may be open.

The battery pack may further include a thermally conductive resin layer between a lower surface of the battery module and the lower pack housing.

### [Advantageous Effects]

According to the present invention, high-temperature heat transferred to an upper part of a battery pack may be blocked efficiently.

### [Brief Description of the Drawings]

FIG. 1 is a cross-sectional view of a battery pack of the related art.
FIG. 2 is an enlarged view of a region A of FIG. 1.
FIG. 3 is a perspective view of a battery module installed in a battery pack of the present invention.
FIG. 4 is a perspective view of a battery pack of a first embodiment.
FIG. 5 is an exploded perspective view of the battery pack of the first embodiment.
FIG. 6 is a cross-sectional view of the battery pack, taken along line A-A' of FIG. 4.
FIG. 7 is a schematic diagram illustrating a gas discharge path according to the first embodiment.
FIG. 8 is a perspective view of a battery pack of a second embodiment.
FIG. 9 is a cross-sectional view of the battery pack, taken along line B-B' of FIG. 8.

### [Best Mode]

Hereinafter, the present invention will be described in detail.

It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof. It should be understood that when a component such as a layer, a film, a region, a plate or the like is referred to as being "on" another component, the component is "right on" the other component or another component is interposed between these components. It should be understood that when a component such as a layer, a film, a region, a plate or the like is referred to as being "below" another component, the component is "right below" the other component or another component is interposed between these components. In addition, it should be understood that when a component is "on" another component, the component is on or below the other component.

Battery modules are accommodated in a battery pack of the present invention.

The number of battery modules to be accommodated may be appropriately set according to required specifications of the battery pack.

A battery module may be of the same type as that mounted on a conventional battery pack. That is, the battery module may include a module frame in which a plurality of battery cells connected in series or in parallel are accommodated.

Each of the battery cells constituting the battery module includes an electrode assembly, an electrolyte, and a case. The plurality of battery cells may be classified into lithium ion batteries, lithium ion polymer batteries, lithium polymer batteries, etc. according to the configurations of the electrode assembly and the electrolyte. Each of the battery cells may be a cylindrical battery cell, a prismatic battery cell, or a pouch type battery cell according to the shape of the case. For example, an electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet. Hereinafter, for convenience of illustration and description, embodiments will be described focusing on a pouch type battery cell.

An electrode assembly included in a battery case includes a positive electrode, a negative electrode, and a separator interposed between the positive electrode and the negative electrode. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

A venting hole is provided in an upper part of a module frame to discharge a high-temperature gas. Alternatively, a battery module in which a module frame structure is minimized for space utilization of a battery pack may be applied to a battery pack.

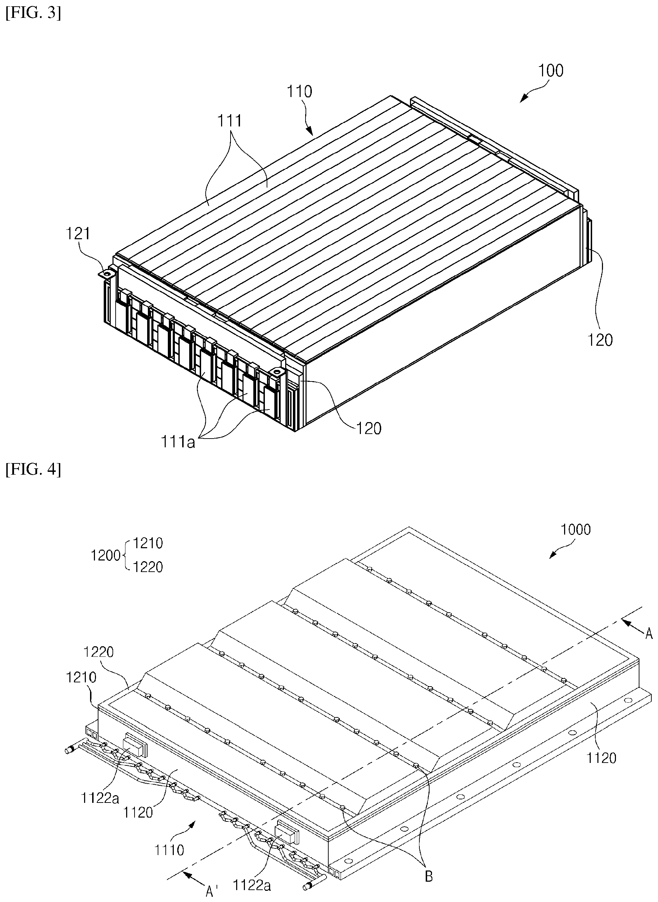

FIG. 3 is a perspective view of a battery module 100 installed in a battery pack of the present invention.

As shown in FIG. 3, the battery module 100 includes a battery cell stack 110 in which a plurality of battery cells 111 are stacked, and a busbar frame 120 located on a front surface and a rear surface of the battery cell stack 110 to provide an electrical connection structure of the battery cells 111.

The battery cell stack 110 may be manufactured by attaching a double-sided tape between the plurality of battery cells 111. Alternatively, although not shown, a band may be further provided to surround a part of the battery cell stack 110 to fix the plurality of battery cells 111.

Electrode leads 111a may protrude from the battery cell 111 in a bidirectional or unidirectional manner. The battery cells 111 may be electrically connected by welding the electrode leads 111a to a bus bar or coupling the electrode leads 111a to electrode leads 111a of a different polarity of adjacent battery cells 111.

As shown in FIG. 3, when the electrode leads 111a protrude in the bidirectional manner, the bus bar frame 120 may be coupled to front and rear surfaces of the battery cell stack 110 in a longitudinal direction.

A plurality of lead slits allowing the electrode leads 111a to pass therethrough may be provided in the bus bar frame 120. As shown in FIG. 3, electrode leads 111a penetrating lead slits may be bent toward electrode leads 111a of a different polarity to be welded together. Alternatively, according to the electrical connection design of the battery cells, the battery cells 111 may be electrically connected by providing an inter-bus bar on a side of the bus bar frame 120 opposite to a surface of the bus bar frame 120 facing the battery cell stack 110 and welding the electrode leads 111a to the inter-bus bar.

Terminal busbars 121 are provided at opposite ends of the bus bar frame 120 for high-voltage connection of the battery module 100. When the battery module 100 is installed in a battery pack, the battery modules 100 may be electrically connected by connecting high-voltage (HV) bus bars to the terminal bus bars 121.

For insulation, the bus bar frame 120 may be manufactured by a plastic injection molding method. However, a manufacturing method of the bus bar frame 120 is not particularly limited as long as an electrical connection structure of the battery cells 111 can be provided by appropriately molding an insulating material.

As shown in FIG. 3, the battery cell stack 110 of the battery module 100 may have open upper and lower surfaces. As described above, the weight of the battery module 100 may be reduced by minimizing the size of a module structure of the battery module 100 (including the module frame surrounding the upper, lower, left, and right surfaces of the battery cell stack 110, end plates covering the front and rear surfaces of the battery cell stack 110, etc.). Therefore, when the battery module 100 is installed in a battery pack, the energy density of the battery pack may improve.

An excessive amount of gas may be also generated in the battery module 100 shown in FIG. 3 due to defects of the battery cells 111 and excessive charging and discharging. When the battery cells 111 burst due to an excessive amount of a high-temperature gas, the high-temperature gas spouts into the battery pack. Therefore, even when the battery module 100 of FIG. 3 is installed inside the battery pack, the fire-resistant member 13 may expand or sag downward from the upper cover 12 toward the battery cells 111 due to the high-temperature gas as shown in FIG. 2. In the case of the battery module 100 of FIG. 3, because the module structure covering the battery cells 111 is minimized, the fire-resistant member 13 may deform and thus impact the battery cells 111, thus causing damage to the battery cells 111. Therefore, the present invention is applicable to a case in which the battery module 100 of FIG. 3 with no venting holes is applied to a battery pack.

Hereinafter, a battery pack of the present invention will be described in detail with reference to the appended drawings.

### (First Embodiment)

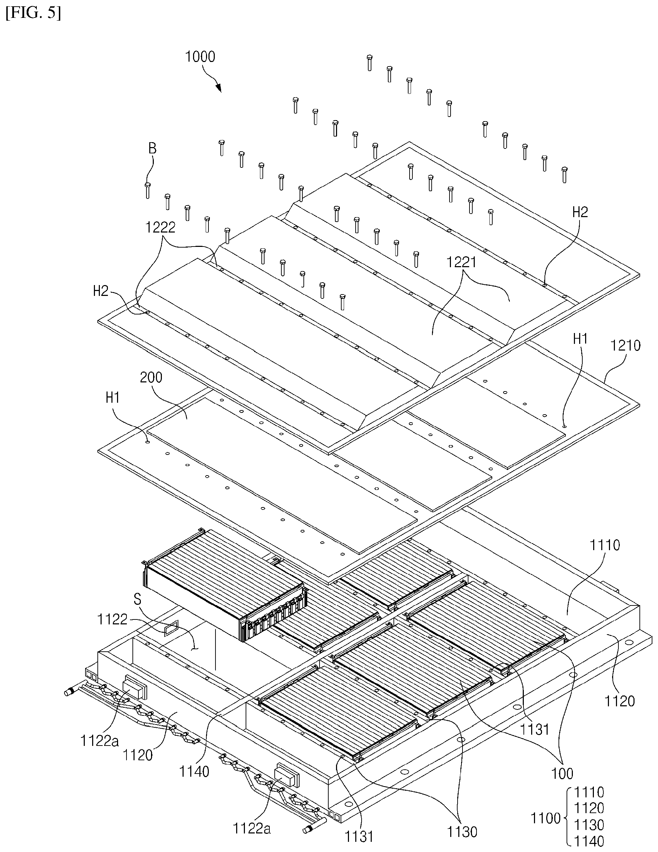

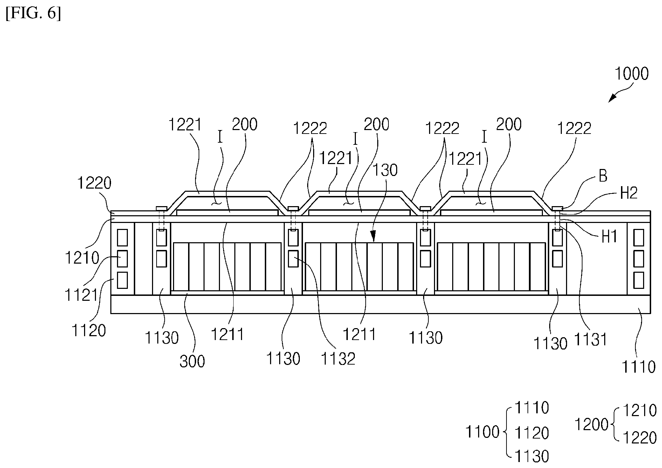

FIG. 4 is a perspective view of a battery pack 1000 of a first embodiment. FIG. 5 is an exploded perspective view of the battery pack 1000 of the first embodiment. FIG. 6 is a cross-sectional view of the battery pack 1000, taken along line A-A' of FIG. 4.

As shown in FIGS. 4 to 6, the battery pack 1000 includes a lower pack housing 1100 with an accommodation space S in which a plurality of battery modules 100 are installed, and an upper cover 1200 coupled to an upper part of the lower pack housing 1100 to cover the accommodation space S.

As shown in FIGS. 4 and 5, the lower pack housing 1100 includes a bottom housing 1110 supporting a lower surface of the battery module 100 and side wall housings 1120 installed along the circumference of the bottom housing 1110. As the side wall housings 1120 are installed on the bottom housing 1110, the accommodation space S whose upper part is open is formed. Thereafter, the upper cover 1200 is coupled to the upper part of the lower pack housing 1100 to airtightly seal the accommodation space S.

A size of the accommodation space S may be determined by adjusting the area of the bottom housing 1110 and the height of the side wall housings 1120. The size of the accommodation space S may be appropriately designed by taking into account the number of battery modules 100 installed in the battery pack 1000, an internal structure of the lower pack housing 1100, etc. to achieve a desired output of the battery pack 1000.

The bottom housing 1110 may be a plate having a rectangular shape. However, the rectangular shape is only an example, and the shape of the bottom housing 1110 may be appropriately changed according to the design of the battery pack 1000. The bottom housing 1110 may be formed of an appropriate material with strength sufficient to withstand overall load of the battery pack 1000.

The bottom housing 1110 may be manufactured by an extrusion molding method. The extrusion molding method comprises melting a raw material such as a metal or plastic by heating, putting the melted raw material into a cylinder, and molding the melted raw material by extruding it from a die using a screw or the like. A molded product manufactured by the extrusion molding method has a uniform cross-sectional shape in an extrusion direction. The bottom housing 1110 manufactured by the extrusion molding method includes a cooling channel (not shown) extending in the longitudinal direction of the bottom housing 1110. An external refrigerant supply system may be fluidly connected to the cooling channel to configure a cooling system of the battery pack 1000. In this case, the number of components of the battery pack 1000 may decrease because a cooling plate is not additionally required, and the total number of processes may decrease because a process of fastening a cooling plate is not required.

The battery pack 1000 of the present embodiment may further include a thermally conductive resin layer 300 between the bottom housing 1110 of the lower pack housing 1100 and the battery module 100. Accordingly, the battery module 100 may be more firmly fixed to the bottom housing 1110. When the cooling system of the battery pack 1000 is configured through the bottom housing 1110 as described above, the thermally conductive resin layer 300 may be sufficiently brought into contact with the lower surface of the battery module 100 and a non-uniform surface of the bottom housing 1110 to maximize an area of the battery module 100 to be cooled. The thermally conductive resin layer 300 may be formed of a thermal resin.

The side wall housings 1120 extend in a direction perpendicular to a circumferential surface of the bottom housing 1110 as shown in FIG. 5. The side wall housings 1120 may be coupled to the bottom housing 1110 using a known technique. For example, the side wall housings 1120 may be coupled to the bottom housing 1110 by friction stir welding or brazing welding.

The side wall housings 1120 may protect structures mounted in the battery pack 1000 from external impact. To this end, the side wall housings 1120 may be formed to a predetermined thickness.

The side wall housings 1120 may provide a fastening structure that fixes the battery pack 1000 when the battery pack 1000 is installed in a vehicle. Alternatively, when the battery pack 1000 is mounted on an energy storage system (ESS), a coupling structure for installation of the battery pack 1000 may be provided.

Similarly, the side wall housings 1120 may be manufactured by the extrusion molding method. Therefore, each of the side wall housings 1120 may be provided with a hollow channel 1121 extending in the longitudinal direction of the side wall housing 1120. Accordingly, the weight of the battery pack 1000 may be reduced by reducing the total weight of the sidewall housings 1120.

As shown in FIGS. 5 and 6, the lower pack housing 1100 may further include cross-beams 1130 that divide the accommodation space S into several pieces and support sides of the battery module 100 installed on the bottom housing 1110. Accordingly, the battery module 100 may be more firmly fixed and the overall structural rigidity of the battery pack 1000 may be improved. Electronic components or devices that manage an electrical state of the battery module 100 may be installed in the accommodation space S divided by the cross-beams 1130, as well as the battery module 100.

As shown in FIGS. 5 and 6, the cross-beams 1130 may extend in the longitudinal direction and a height direction of the battery module 100. A length of the cross-beams 1130 may be appropriately selected according to the design of the inside of the battery pack 1000.

A length (height) of the cross-beams 1130 in the height direction may be set to be greater than the height of the battery module 100. By setting the height of the cross-beams 1130 to be greater than that of the battery module 100, the upper cover 1200 and the battery module 100 to be fastened to upper surfaces of the cross-beams 1130 may be spaced a predetermined distance from each other. As described above, the cross-beams 1130 may be coupled to the upper cover 1200 to support the upper cover 1200 at the bottom of the upper cover 1200.

The cross-beams 1130 may also be manufactured by the extrusion molding method. In this case, through-channels 1132 extending in the longitudinal direction may be formed in the cross-beams 1130. Accordingly, the total weight of the cross-beams 1130 may decrease.

As shown in FIG. 5, the lower pack housing 1100 may further include a center frame 1140 across a central area of the bottom housing 1110. The center frame 1140 may be installed at the central area of the bottom housing 1110 while extending in the longitudinal direction of the bottom housing 1110. Accordingly, the rigidity of the battery pack 1000 in the longitudinal direction may be further improved. In addition, it may be possible to prevent an undesired short circuit between battery modules 100 by providing the center frame 1140 between the battery modules 100.

As shown in FIGS. 4 to 6, the upper cover 1200 includes a first upper cover 1210 and a second upper cover 1220.

As shown in FIGS. 5 and 6, the first upper cover 1210 is partially coupled to the second upper cover 1220 while facing the battery module 100.

The first upper cover 1210 may be disposed under the second upper cover 1220.

Thicknesses of the first upper cover 1210 and the second upper cover 1220 may be set to be different from each other. For example, the thickness of the first upper cover 1210 may be greater than that of the second upper cover 1220. In this case, even when the second upper cover 1220 is damaged due to strong external impact applied thereto, the first upper cover 1210 may protect the battery module 100 from the external impact. Alternatively, the thickness of the second upper cover 1220 may be greater than that of the first upper cover 1210. In this case, even when a strong external force is applied to the upper cover 1200, the battery module 100 or the battery pack 1000 may be protected from the external force due to the rigidity of the second upper cover 1220.

The first upper cover 1210 may be manufactured as a flat plate having a shape corresponding to a circumferential shape of the bottom housing 1110. For example, when the bottom housing 1110 has a rectangular shape, the first upper cover 1210 may be manufactured as a rectangular flat plate. The shape of the first upper cover 1210 is not particularly limited as long as the first upper cover 1210 covers the accommodation space S to airtightly close the inside of the battery pack 1000.

The first upper cover 1210 may be fastened to upper surfaces of the side wall housings 1120 and the cross-beams 1130. In this case, the height of the cross-beams 1130 may be greater than that of the battery module 100 and thus the first upper cover 1210 may be disposed to be spaced apart from the battery module 100 as shown in FIG. 6.

In the battery pack 10 of the related art, the fire-resistant member 13 is installed on the inner side of the upper cover 12 facing the battery module 1 and thus the venting hole 1a of the battery module 1 may be blocked by the fire-resistant member 13 when a high-temperature gas spouts out. In contrast, in the present embodiment, the lower surface 1211 of the first upper cover 1210 faces the upper surface 130 of the battery module 100 as shown in FIG. 6. That is, a member that blocks a venting hole in the battery module 100 even when a high-temperature gas is discharged from the battery module 100 is not installed on a surface of the first upper cover 1210 facing the battery module 100. Therefore, it is possible to prevent a danger (e.g., the transfer of heat to adjacent battery cells, explosion of the battery module 100, etc.) that may occur due to clogging of the venting hole. Even when the battery module 100 of FIG. 3 is installed, a separate fire-resistant member is not provided on the lower surface 1211 of the first upper cover 1210, thus preventing damage to the battery cell 111 due to deformation of the fire-resistant member.

The battery module 100 may be isolated in a sealed space between the cross-beams 1130 due to the first upper cover 1210. Therefore, even when a high-temperature gas spouts in a predetermined battery module 100, the high-temperature gas may not be transmitted to battery modules 100 beyond the cross-beams 1130.

As shown in FIGS. 4 to 6, at least a part of the second upper cover 1220 is spaced apart from the first upper cover 1210, so that a heat insulating layer I may be provided between the first and second upper covers 1210 and 1220. For example, edge portions of the first and second upper covers 1210 and 1220 may be coupled to each other, and at least portions of center portions thereof may be spaced apart from each other. In this case, a space between the first upper cover 1210 and the second upper cover 1220 may be the heat insulating layer I.

The heat insulating layer I may be an air layer between the first upper cover 1210 and the second upper cover 1220. Alternatively, the heat insulating layer I may be a vacuum space with a predetermined degree of vacuum. As described above, the heat insulating layer I may be provided inside the upper cover 1200, so that the transfer of heat toward the upper part of the battery pack 1000 may be minimized even when a separate fire-resistant member is not applied to the lower surface 1211 of the first upper cover 1210. In addition, when the battery pack 1000 is installed at the bottom of a vehicle, it may be possible to minimize the transfer of high-temperature heat to passengers in the vehicle.

As illustrated in FIGS. 5 and 6, a heat insulating member 200 may be disposed to further minimize the transfer of heat toward the upper part of the battery pack 1000.

As shown in FIGS. 5 and 6, the heat insulating member 200 is on a surface of the first upper cover 1210 facing the heat insulating layer I. That is, the heat insulating member 200 may be installed in the upper cover 1200. Accordingly, even when a high-temperature gas spouts from the battery cells 111 to the battery module 100, the first upper cover 1210 may block a gap between the heat insulating member 200 and the battery module 100, thereby minimizing thermal deformation of the heat insulating member 200.

As shown in FIG. 5, the heat insulating member 200 may be a heat insulating block or a heat insulating sheet having a rectangular shape. Alternatively, the heat insulating member 200 may be a heat-resistant resin applied to a surface of the first upper cover 1210 facing the heat insulating layer I.

The heat insulating member 200 may include at least one selected from the group consisting of nitrile butadiene rubber, natural rubber, fluorine rubber, high cis BR (HBR), styrene butadiene rubber, chloroprene rubber, ethylene propylene terpolymer (EPDM), and silicone rubber. However, according to the present invention, the heat insulating member 200 is provided in the heat insulating layer I between the first upper cover 1210 and the second upper cover 1220 and thus the battery module 100 is not likely to be damaged due to thermal deformation of the heat insulating member 200. Therefore, a material of the heat insulating member 200 is not particularly limited as long as the thermal conductivity of the material is low and thus the transfer of heat transfer can be delayed.

As shown in FIGS. 5 and 6, the heat insulating member 200 may include a plurality of members spaced a predetermined distance from each other in a longitudinal direction of the battery pack 1000 to correspond to the upper part of the battery module 100. The number and area of heat insulating members 200 to be installed are not particularly limited as long as they are installed in the first upper cover 1210 and block heat generated from the battery module 100.

As shown in FIGS. 4 to 6, the second upper cover 1220 includes an upper plate 1221 spaced apart from the first upper cover 1210 to define the heat insulating layer I, and a partition plate 1222 bent from the upper plate 1221 toward the first upper cover 1210.

The partition plate 1222 is connected to an end of the upper plate 1221 in a width direction and is bent toward the first upper cover 1210. In this case, referring to FIGS. 4 to 6, the width direction of the upper plate 1221 corresponds to the longitudinal direction of the battery pack 1000, and a longitudinal direction of the upper plate 1221 corresponds to a width direction of the battery pack 1000. As shown in FIGS. 5 and 6, an end of the partition plate 1222 that extends is provided with a flat surface that is substantially parallel to the first upper cover 1210. As the flat surface of the partition plate 1222 is in contact with the first upper cover 1210, the heat insulating layer I is divided into several parts.

As shown in FIGS. 5 and 6, the partition plate 1222 may support the upper plate 1221 such that the upper plate 1221 is spaced apart from the first upper cover 1210. Therefore, even when an external impact is applied to the upper plate 1221, the partition plate 1222 connected to the upper plate 1221 may disperse the external impact or vibration due to the external impact. Furthermore, the overall durability and structural rigidity of the second upper cover 1220 may improve.

Because the heat insulating layer I is divided into several parts by the partition plate 1222, when even a part of the heat insulating layer I is overheated, the transfer of heat to a neighboring part of the heat insulating layer I may be blocked by the partition plate 1222. That is, even when thermal runaway occurs from a module under a part of the heat insulating layer I and the part of the heat insulating layer I is overheated, the transfer of heat from the part of the heat insulating layer I to other neighboring parts of the heat insulating layer I may be blocked by the partition plate 1222. Accordingly, the partition plate 1222 may also prevent the propagation of heat to neighboring modules.

The partition plate 1222 may be fixed to the cross-beams 1130 together with the first upper cover 1210. For example, as shown in FIGS. 5 and 6, a plurality of fastening members B may be passed through second through-holes H2 in the partition plate 122 and first through-holes H1 in the first upper cover 1210 and be coupled to fastening grooves 1131 in the cross-beams 1130 to fasten the partition plate 1222 and the first upper cover 1210 to the cross-beams 1130. In this case, a sealing member (not shown) such as an O-ring may be interposed between the fastening members B and the through-holes H1 and H2 to maintain the airtightness or watertightness of the battery pack 1000. The fastening members B may be bolts.

However, the present invention is not limited to thereto and a coupling member is not particularly limited as long as the partition plate 1222 and the first upper cover 1210 can be fixed to the cross-beams 1130. For example, the partition plate 1222 and the first upper cover 1210 may be coupled to each other by welding, and the partition plate 1222 and the first upper cover 1210 that are coupled to each other may be welded or fastened to the cross-beams 1130.

The battery pack 1000 according to the present embodiment includes the upper cover 1200 with the heat insulating layer I, and thus, it is not necessary to install a separate fire-resistant member in the accommodation space S of the battery module 100, unlike in the related art. Therefore, damage to or explosion of the battery module 100 or the battery cells 111 due to the deformation of a fire-resistant member may be prevented. In addition, the transfer of heat to the upper part of the battery pack 1000 may be prevented by installing the heat insulating member 200 in the heat insulating layer I.

However, when a gas spouts continuously from the battery module 100, pressure of the accommodation space S may rise excessively, thus causing the explosion of the battery pack 1000. Therefore, when a gas spouting from the battery module 100 accumulates to some extent in the accommodation space S, a means for discharging the gas to the outside of the battery pack 1000 is required.

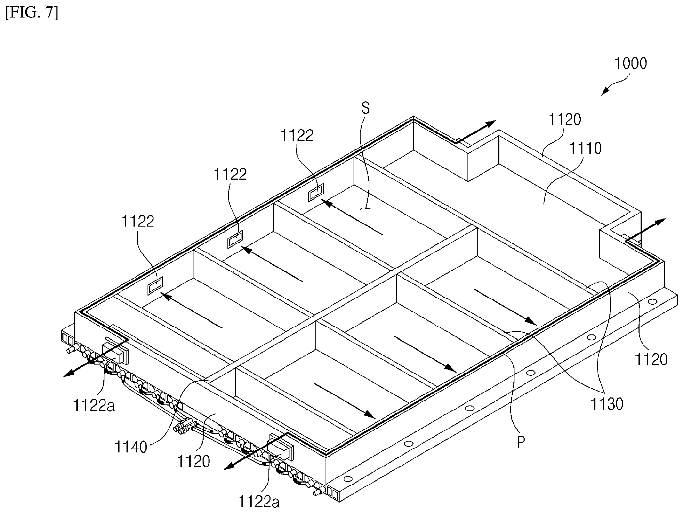

FIG. 7 is a schematic diagram illustrating a gas discharge path P according to the present embodiment.

As shown in FIG. 7, a surface of the side wall housing 1120 facing the accommodation space S may be provided with side wall communication holes 1122 for communication between the accommodation space S and the hollow channels 1121. In addition, the side wall housings 1120 are installed along the circumference of the bottom housing 1110 such that the hollow channels 1121 in the side wall housings 1120 may communicate with each other. Therefore, when a high-temperature gas spouts from the battery module 100 to the accommodation space S, the high-temperature gas may flow to the hollow channel 1121 of the side wall housing 1120 facing the battery module 100 through the side wall communication holes 1122 and thereafter flow to the hollow channel 1121 of the other side wall housing 112.

As shown in FIG. 7, each of the side wall housings 1120 may include a gas discharge hole (not shown) for communication between the hollow channel 1121 and the outside, and a venting device 1122a installed in the gas discharge hole.

In the venting device 1122a, a venting cap configured to prevent the leakage of a gas may be provided in the gas discharge hole. In addition, a gas sealing member may be installed in the gas discharge hole or the venting cap. The gas sealing member may be, for example, a sheet type member and may deform at a predetermined pressure and/or a predetermined temperature or higher to open the gas outlet to the outside. For example, the gas sealing member may be a rupture sheet configured to rupture when the pressure of a gas to be vented is greater than or equal to a predetermined pressure. Alternatively, the sheet type member may melt and open the gas outlet at a predetermined temperature or higher. To this end, the sheet type member may be formed of a film or foam material that is vulnerable to high temperatures. Therefore, when a high-temperature gas accumulates in the hollow channel 1121 and a pressure and/or temperature of the hollow channel 1121 rises above a certain level, the gas sealing member opens the gas discharge hole to discharge the high-temperature gas to the outside.

For convenience of illustration, a gas discharge path P shown in FIG. 7 is only an example of various gas discharge paths. A gas discharge path is not particularly limited as long as a gas in the accommodation space S can be discharged to the outside.

### (Second Embodiment)

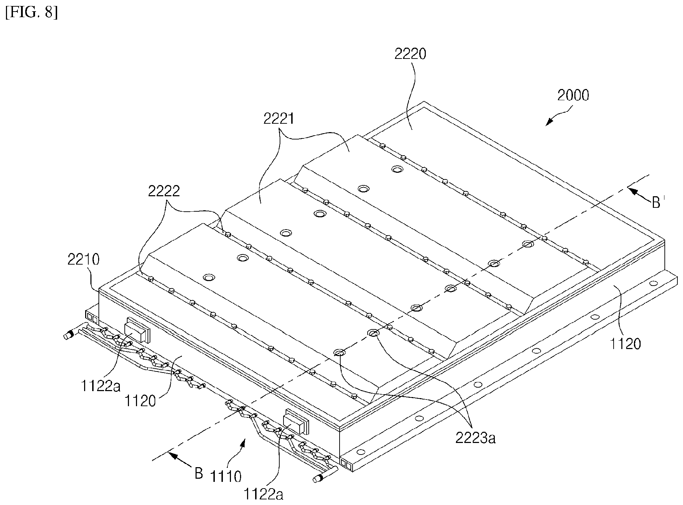

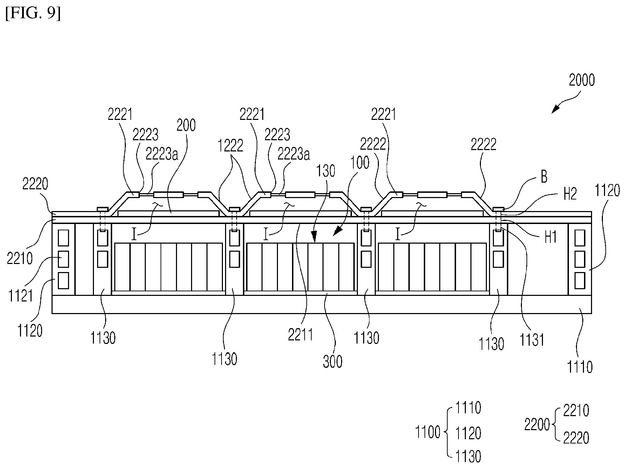

FIG. 8 is a perspective view of a battery pack 2000 of a second embodiment. FIG. 9 is a cross-sectional view of the battery pack 2000, taken along line B-B' of FIG. 8.

Even when a high-temperature gas discharging into an accommodation space S is discharged to the outside of the battery pack 2000 through a side wall housing 1120, the high-temperature gas may transfer heat to a first upper cover 2210 and a second upper cover 2220 during the discharging of the high-temperature gas. As the upper cover 2200 is heated, an air layer of a heat insulating layer I in the upper cover 2200 may also be heated. In this case, for example, the upper cover 2200 may be separated from the first upper cover 2210 due to the expansion of air due to a sharp increase in a temperature, thus causing damage to the upper cover 2200.

The battery pack 2000 of the present embodiment is different from the battery pack 1000 of the first embodiment in that the second upper cover 2200 may be provided with a plurality of upper discharge holes 2223 for communication between the heat insulating layer I and the outside of the battery pack 2000.

The battery pack 2000 of the present embodiment may discharge heated air from the heat insulating layer I through the upper discharge holes 2223, thereby preventing damage to the upper cover 2200 due to the expansion of air in the heat insulating layer I. In addition, heated air in the heat insulating layer I may be discharged to the outside through the upper discharge holes 2223, and relatively cold air may be supplied into the heat insulating layer I to circulate the air in the heat insulating layer I. As described above, even when air in the heat insulating layer I is heated, the air may be circulated through the upper discharge holes 2223 to cool the air in the heat insulating layer I. Even when the upper discharge holes 2223 are provided, the accommodation space S is closed by the first upper cover 2210 and thus the airtightness or watertightness of the inside of the battery pack 2000 does not decrease significantly.

The upper discharge holes 2223 extend from an outer surface of the second upper cover 2220 to an inner surface of the second upper cover 2200 facing the heat insulating layer I for communication of the heat insulating layer I with the outside. The upper discharge holes 2223 may have a circular shape, an elliptical shape, a quadrangular shape, a cross shape, or a combination thereof when viewed from an upper part of the battery pack 2000.

As shown in FIGS. 8 and 9, the upper discharge holes 2223 may be provided in the upper plate 2221.

However, when the upper discharge holes 2223 are always open, unintended fluid may penetrate the battery pack 2000 through various paths. In addition, a foreign material penetrating through the upper discharge holes 2223 may cause damage (corrosion, contamination, etc.) to the first upper cover 2210. In this case, the airtightness and watertightness of the battery pack 2000 are not maintained, thus causing an unexpected failure to occur when the battery pack 2000 is used. To prevent this problem, upper discharge members 2223a may be installed in the upper discharge holes 2223.

The upper discharge members 2223a may close the upper discharge holes 2223 to airtightly close the heat insulating layer I. However, when an internal temperature of the heat insulating layer I increases above a predetermined temperature due to the heating of air in the heat insulating layer I due to a high-temperature gas discharged from the battery module 100, the upper discharge members 2223a may rupture or be damaged, thus communicating the heat insulating layer I with the outside of the battery pack 2000. When the upper discharge holes 2223 are open, heated air may be discharged from the heat insulating layer I and external air may be introduced to cool the heat insulating layer I.

The upper discharge members 2223a may be configured similarly to the venting device 1122a of the first embodiment described above. For example, a sheet type gas sealing member may be installed in each of the upper discharge holes 2223.

As described above, the upper cover 2200 of the present embodiment may not directly discharge heated air from the heat insulating layer I but rather may selectively discharge the heated air under a condition of a predetermined temperature or higher. The condition of the predetermined temperature may be selected from an appropriate range in consideration of the safety of passengers riding in a vehicle.

A condition that causes rupture of or damage to the upper discharge members 2223a may be different from a condition that allows the venting device 1122a to open the gas discharge hole. For example, the upper discharge members 2223a may rupture at a temperature lower than a temperature at which the venting device 1122a opens the gas discharge hole, thus causing the upper discharge holes 2223 to appear.

According to the present embodiment, when a temperature of the heat insulating layer I rises excessively, heated air may be discharged from the heat insulating layer I to prevent deformation of and damage to the second upper cover 2220 or the upper cover 2200 due to the expansion of air and to cool the heat insulating layer I. In addition, by installing the upper discharge members 2223a in the upper discharge holes 2223, heated air may be selectively discharged only in a specific situation in which a temperature of the heat insulating layer I rises above a predetermined temperature.

A configuration that is the same as that of the first embodiment may also apply to the present embodiment. For example, as shown in FIG. 9, a bottom surface 2211 of the first upper cover 2210 and the upper surface 130 of the battery module 100 may directly face each other. In accordance with claim 1, the second upper cover 2220 includes the upper plate 2221 and a partition plate 2222.

The above description is intended only to provide examples of the technical idea of the present invention as set out in the claims and thus various modification and changes may be made by those of ordinary skill in the technical field to which the present invention pertains. Therefore, the drawings of the present invention set forth herein are intended not to limit the technical idea of the present invention but to describe the technical idea as set out in the claims.

In the present specification, terms representing directions such as upper, lower, left, right, forward and backward are used only for convenience of description and thus it will be obvious that these terms may be changed according to a position of an object or an observer.

### (Reference Numerals)

1: battery module of related art
10: battery pack of related art
11: lower pack housing of battery pack of related art
12: upper cover of battery pack of related art
13: fire-resistant member
100: battery module
1000, 2000: battery pack
1100: lower pack housing
1110: bottom housing
1120: side wall housing
1130: cross-beam
1140: center frame
1200, 2200: upper cover
1210, 2210: first upper cover
1220, 2220: second upper cover
I: heat insulating layer

## Claims

1. A battery pack (1000,2000) comprising:
a battery module (100);
a lower pack housing (1100) with an accommodation space (S) in which the battery module (100) is installed; and
an upper cover (1200,2200) coupled to an upper part of the lower pack housing (1100) to cover the accommodation space (S),
wherein the upper cover (1200,2200) comprises:
a first upper cover (1210, 2210) facing the battery module (100); and
a second upper cover (1220, 2220), at least a part of which is spaced apart from the first upper cover (1210, 2210) to form a heat insulating layer (I) between the first and second upper covers (1210, 2210 ; 1220, 2220),
**characterized in that**
the second upper cover (1220, 2220) comprises an upper plate (1221, 2221) spaced apart from the first upper cover (1210, 2210), and a partition plate (1222) connected to an end of the upper plate in a width direction and bent from the upper plate toward the first upper cover (1210, 2210) to divide the heat insulating layer (I) into several parts.

2. The battery pack (1000,2000) of claim 1, wherein the first upper cover (1210, 2210) and the battery module (100) are spaced apart from each other, and
a lower surface of the first upper cover (1210, 2210) faces an upper surface of the battery module (100).

3. The battery pack (1000,2000) of claim 1, wherein the second upper cover (1220, 2220) comprises a plurality of upper discharge holes (2223) that communicate the heat insulating layer (I) with the outside.

4. The battery pack (1000,2000) of claim 3, wherein the second upper cover (1220, 2220) comprises upper discharge members configured to close the upper discharge holes (2223) to airtightly seal the heat insulating layer (I) and configured to rupture thereby communicating the heat insulating layer (I) with the outside when an internal temperature of the heat insulating layer (I) rises to a predetermined temperature or higher.

5. The battery pack (1000,2000) of claim 1, wherein the lower pack housing (1100) comprises a bottom housing (1110) configured to support a bottom surface of the battery module (100), and cross-beams (1130) configured to divide the accommodation space into several parts and support sides of the battery module (100),
wherein the cross-beams (1130) are coupled to the upper cover.

6. The battery pack (1000,2000) of claim 1, wherein a thickness of the first upper cover (1210, 2210) is different from a thickness of the second upper cover (1220, 2220).

7. The battery pack (1000,2000) of claim 1, wherein the lower pack housing (1100) comprises a bottom housing (1110) configured to support a lower surface of the battery module (100), and side wall housings (1120) installed along circumference of the bottom housing (1110),
wherein each of the side wall housings (1120) comprises:
an hollow channel (1121); and
a side wall communication hole to communicate the accommodation space with the hollow channel (1121), the side wall communication hole being provided in a surface of the side wall housing (1120) facing the accommodation space.

8. The battery pack (1000,2000) of claim 1, further comprising a heat insulating member in the heat insulating layer (I).

9. The battery pack (1000,2000) of claim 8, wherein the heat insulating member is a heat insulating block on a surface of the first upper cover (1210, 2210) facing the heat insulating layer (I).

10. The battery pack (1000,2000) of claim 1, wherein the battery module (100) comprises:
a battery cell stack in which a plurality of battery cells are stacked; and
a bus bar frame coupled to a front surface and a rear surface of the battery cell stack in a longitudinal direction,
wherein an upper surface and a lower surface of the battery cell stack are open.

11. The battery pack (1000,2000) of claim 1, further comprising a thermally conductive resin layer between a lower surface of the battery module (100) and the lower pack housing (1100).

## Patentansprüche

1. Batteriepack (1000, 2000), umfassend: ein Batteriemodul (100); ein unteres Packgehäuse (1100) mit einem Aufnahmeraum (S), in dem das Batteriemodul (100) installiert ist; und eine obere Abdeckung (1200, 2200), die mit einem oberen Teil des unteren Packgehäuses (1100) gekoppelt ist, um den Aufnahmeraum (S) abzudecken, wobei die obere Abdeckung (1200, 2200) umfasst: eine erste obere Abdeckung (1210, 2210), die dem Batteriemodul (100) zugewandt ist; und eine zweite obere Abdeckung (1220, 2220), von der mindestens ein Teil von der ersten oberen Abdeckung (1210, 2210) beabstandet ist, um eine Wärmeisolierschicht (I) zwischen der ersten und der zweiten oberen Abdeckung (1210, 2210; 1220, 2220) zu bilden, **dadurch gekennzeichnet, dass** die zweite obere Abdeckung (1220, 2220) eine obere Platte (1221, 2221), die von der ersten oberen Abdeckung (1210, 2210) beabstandet ist, und eine Trennplatte (1222) umfasst, die mit einem Ende der oberen Platte in einer Breitenrichtung verbunden und von der oberen Platte in Richtung der ersten oberen Abdeckung (1210, 2210) gebogen ist, um die Wärmeisolierschicht (I) in mehrere Teile zu unterteilen.

2. Batteriepack (1000, 2000) nach Anspruch 1, wobei die erste obere Abdeckung (1210, 2210) und das Batteriemodul (100) voneinander beabstandet sind, und eine untere Fläche der ersten oberen Abdeckung (1210, 2210) einer oberen Fläche des Batteriemoduls (100) zugewandt ist.

3. Batteriepack (1000, 2000) nach Anspruch 1, wobei die zweite obere Abdeckung (1220, 2220) eine Vielzahl von oberen Auslasslöchern (2223) umfasst, die die Wärmeisolierschicht (I) mit der Außenseite verbinden.

4. Batteriepack (1000, 2000) nach Anspruch 3, wobei die zweite obere Abdeckung (1220, 2220) obere Auslasselemente umfasst, die so konfiguriert sind, dass sie die oberen Auslasslöcher (2223) schließen, um die Wärmeisolierschicht (I) luftdicht zu verschließen, und so konfiguriert sind, dass sie aufreißen, wodurch die Wärmeisolierschicht (I) mit der Außenseite verbunden wird, wenn eine Innentemperatur der Wärmeisolierschicht (I) auf eine vorbestimmte Temperatur oder höher ansteigt.

5. Batteriepack (1000, 2000) nach Anspruch 1, wobei das untere Packgehäuse (1100) ein unteres Gehäuse (1110), das so konfiguriert ist, dass es eine untere Fläche des Batteriemoduls (100) stützt, und Querträger (1130) umfasst, die so konfiguriert sind, dass sie den Aufnahmeraum in mehrere Teile unterteilen und Seiten des Batteriemoduls (100) stützen, wobei die Querträger (1130) mit der oberen Abdeckung gekoppelt sind.

6. Batteriepack (1000, 2000) nach Anspruch 1, wobei sich eine Dicke der ersten oberen Abdeckung (1210, 2210) von einer Dicke der zweiten oberen Abdeckung (1220, 2220) unterscheidet.

7. Batteriepack (1000, 2000) nach Anspruch 1, wobei das untere Packgehäuse (1100) ein unteres Gehäuse (1110), das so konfiguriert ist, dass es eine untere Fläche des Batteriemoduls (100) stützt, und Seitenwandgehäuse (1120) umfasst, die entlang des Umfangs des unteren Gehäuses (1110) installiert sind, wobei jedes der Seitenwandgehäuse (1120) umfasst: einen Hohlkanal (1121); und ein Seitenwand-Kommunikationsloch, um den Aufnahmeraum mit dem Hohlkanal (1121) zu verbinden, wobei das Seitenwand-Kommunikationsloch in einer dem Aufnahmeraum zugewandten Fläche des Seitenwandgehäuses (1120) vorgesehen ist.

8. Batteriepack (1000, 2000) nach Anspruch 1, ferner umfassend ein Wärmeisolierelement in der Wärmeisolierschicht (I).

9. Batteriepack (1000, 2000) nach Anspruch 8, wobei das Wärmeisolierelement ein Wärmeisolierblock auf einer Fläche der ersten oberen Abdeckung (1210, 2210) ist, die der Wärmeisolierschicht (I) zugewandt ist.

10. Batteriepack (1000, 2000) nach Anspruch 1, wobei das Batteriemodul (100) umfasst:
einen Batteriezellenstapel, in dem eine Vielzahl von Batteriezellen gestapelt sind; und
einen Sammelschienenrahmen, der mit einer Vorderfläche und einer Rückfläche des Batteriezellenstapels in einer Längsrichtung gekoppelt ist, wobei eine obere Fläche und
eine untere Fläche des Batteriezellenstapels offen sind.

11. Batteriepack (1000, 2000) nach Anspruch 1, ferner umfassend eine thermisch leitfähige Harzschicht zwischen einer unteren Fläche des Batteriemoduls (100) und dem unteren Packgehäuse (1100).

## Revendications

1. Un bloc-batterie (1000, 2000) comprenant :
un module de batterie (100) ;
un boîtier de bloc inférieur (1100) avec un espace de logement (S) dans lequel le module de batterie (100) est installé ; et
un couvercle supérieur (1200, 2200) couplé à une partie supérieure du boîtier de bloc inférieur (1100) pour couvrir l'espace de logement (S),
dans lequel le couvercle supérieur (1200, 2200) comprend :
un premier couvercle supérieur (1210, 2210) faisant face au module de batterie (100) ; et
un second couvercle supérieur (1220, 2220), dont au moins une partie est espacée du premier couvercle supérieur (1210, 2210) pour former une couche d'isolation thermique (I) entre les premier et second couvercles supérieurs (1210, 2210 ; 1220, 2220), **caractérisé en ce que** le second couvercle supérieur (1220, 2220) comprend une plaque supérieure (1221, 2221) espacée du premier couvercle supérieur (1210, 2210), et une plaque de séparation (1222) connectée à une extrémité de la plaque supérieure dans une direction de la largeur et pliée à partir de la plaque supérieure vers le premier couvercle supérieur (1210, 2210) pour diviser la couche d'isolation thermique (I) en plusieurs parties.

2. Le bloc-batterie (1000, 2000) selon la revendication 1, dans lequel le premier couvercle supérieur (1210, 2210) et le module de batterie (100) sont espacés l'un de l'autre, et une surface inférieure du premier couvercle supérieur (1210, 2210) fait face à une surface supérieure du module de batterie (100).

3. Le bloc-batterie (1000, 2000) selon la revendication 1, dans lequel le second couvercle supérieur (1220, 2220) comprend une pluralité de trous d'évacuation supérieurs (2223) qui font communiquer la couche d'isolation thermique (I) avec l'extérieur.

4. Le bloc-batterie (1000, 2000) selon la revendication 3, dans lequel le second couvercle supérieur (1220, 2220) comprend des éléments de décharge supérieurs configurés pour fermer les trous d'évacuation supérieurs (2223) afin de sceller hermétiquement la couche d'isolation thermique (I) et configurés pour se rompre, faisant ainsi communiquer la couche d'isolation thermique (I) avec l'extérieur lorsqu'une température interne de la couche d'isolation thermique (I) s'élève à une température prédéterminée ou plus.

5. Le bloc-batterie (1000, 2000) selon la revendication 1, dans lequel le boîtier de bloc inférieur (1100) comprend un boîtier de fond (1110) configuré pour supporter une surface inférieure du module de batterie (100), et des traverses (1130) configurées pour diviser l'espace de logement en plusieurs parties et supporter les côtés du module de batterie (100), dans lequel les traverses (1130) sont couplées au couvercle supérieur.

6. Le bloc-batterie (1000, 2000) selon la revendication 1, dans lequel une épaisseur du premier couvercle supérieur (1210, 2210) est différente d'une épaisseur du second couvercle supérieur (1220, 2220).

7. Le bloc-batterie (1000, 2000) selon la revendication 1, dans lequel le boîtier de bloc inférieur (1100) comprend un boîtier de fond (1110) configuré pour supporter une surface inférieure du module de batterie (100), et des boîtiers de paroi latérale (1120) installés le long de la circonférence du boîtier de fond (1110), dans lequel chacun des boîtiers de paroi latérale (1120) comprend : un canal creux (1121) ; et un trou de communication de paroi latérale pour faire communiquer l'espace de logement avec le canal creux (1121), le trou de communication de paroi latérale étant prévu dans une surface du boîtier de paroi latérale (1120) faisant face à l'espace de logement.

8. Le bloc-batterie (1000, 2000) selon la revendication 1, comprenant en outre un élément d'isolation thermique dans la couche d'isolation thermique (I).

9. Le bloc-batterie (1000, 2000) selon la revendication 8, dans lequel l'élément d'isolation thermique est un bloc d'isolation thermique sur une surface du premier couvercle supérieur (1210, 2210) faisant face à la couche d'isolation thermique (I).

10. Le bloc-batterie (1000, 2000) selon la revendication 1, dans lequel le module de batterie (100) comprend : un empilement de cellules de batterie dans lequel une pluralité de cellules de batterie sont empilées ; et un cadre de barre omnibus couplé à une surface avant et à une surface arrière de l'empilement de cellules de batterie dans une direction longitudinale, dans lequel une surface supérieure et une surface inférieure de l'empilement de cellules de batterie sont ouvertes.

11. Le bloc-batterie (1000, 2000) selon la revendication 1, comprenant en outre une couche de résine thermiquement conductrice entre une surface inférieure du module de batterie (100) et le boîtier de bloc inférieur (1100).
